# FASCICULE DE BREVET EUROPEEN

(11) **EP 1 116 178 B1**
(45) Date de publication et mention de la délivrance du brevet: **27.11.2002**
(21) Numéro de dépôt: 99940259.7
(22) Date de dépôt: 31.08.1999
(51) Int. Cl.: G06K 19/077

(54) **CARTE A PUCE DE FORMAT STANDARD COMPRENANT UNE MINI-CARTE DETACHABLE ET PROCEDE DE FABRICATION**
STANDARDFORMATIGE IC-KARTE MIT EINER ABNEHMBAREN MINI-KARTE UND HERSTELLUNGSVERFAHREN
STANDARD FORMAT SMART CARD COMPRISING A REMOVABLE MINICARD AND METHOD FOR MAKING SAME

(30) Priorité: 24.09.1998 FR 9811971
(43) Date de publication de la demande: 18.07.2001
(73) Titulaire: GEMPLUS, 13420 Gemenos (FR)
(72) Inventeur: HOUSSE, Nicolas, F-83640 Saint Zacharie (FR)
(86) Numéro de dépôt international: FR9902071
(87) Numéro de publication internationale: WO00017814

(56) Documents cités:
- DE-A- 19 606 789
- US-A- 4 764 803
- US-A- 5 362 955

## Description

L'invention concerne les cartes à microcircuit électronique, plus généralement connues sous le nom de cartes à puces.

Un des problèmes que l'on rencontre fréquemment pour les produits de très grande diffusion est celui de la normalisation, pour que des produits émanant de plusieurs constructeurs différents puissent être utilisés dans les mêmes appareils.

C'est le cas en particulier des cartes à puces : elles sont utilisées par exemple dans les appareils téléphoniques publics, dans les lecteurs de cartes associés à des ordinateurs personnels, dans des applications bancaires, etc... Il a donc fallu adopter des normes précises de construction que tous les constructeurs doivent respecter. Le grand public connaît maintenant très bien le format qui a été adopté, au moins en ce qui concerne les dimensions extérieures de la carte : c'est le format des cartes de crédit classiques à pistes magnétiques. La carte à puce est un rectangle d'environ 8,5 cm de long sur 5,4 cm de large et un peu moins d'un millimètre d'épaisseur (normes internationales ISO 7810 et 7816 aujourd'hui).

Il en résulte bien entendu que les machines de fabrication de cartes à puce sont construites en fonction de ces normes, pour pouvoir produire des cartes qui respectent les normes.

Mais dans certaines applications, on s'aperçoit que ce format n'est pas idéal. C'est le cas en particulier pour des applications miniaturisées. Par exemple, lorsqu'une carte à puce doit être utilisée dans un boîtier portatif de très petites dimensions, il n'est pas certain que le format actuel, malgré sa petite taille, reste acceptable. A titre d'exemple, on peut citer le radiotéléphone mobile, dont le boîtier portatif devrait utiliser des cartes à puces de format beaucoup plus petit que le format actuel selon la norme GSM11-11.

L'invention vise à proposer une solution technique économique pour réaliser des cartes à puces de format plus petit que le format généralement utilisé.

Des procédés ont déjà été proposés dans l'art antérieur pour réaliser des cartes à puce de format réduit. Un procédé, décrit notamment dans la demande de brevet EP-A-0 521 778, consiste à réaliser toutes les étapes de fabrication d'une carte à puce de format standard et à effectuer une étape supplémentaire de prédécoupe partielle de la carte au format standard de manière à ce que la carte de petit format soit détachable par une simple pression des doigts. La prédécoupe partielle est réalisée autour du micromodule contenu dans la carte. Elle est constituée par une fente le long du pourtour de la carte de format réduit, la fente étant interrompue localement pour laisser de place en place des traverses entre la carte de format réduit et la carte de format standard. Ces traverses sont en particulier affaiblies en épaisseur, au niveau de la carte de format réduit, pour permettre la séparation de celle-ci et du reste du corps de carte de format standard en exerçant une simple pression des doigts.

Un inconvénient majeur de ce type de procédé réside dans le fait que le détachement de la carte de format réduit peut sous certaines rares conditions ne pas se faire très nettement. En effet, les efforts de cisaillement peuvent être insuffisamment concentrés à l'endroit où la découpe doit se faire si bien que la carte de format réduit peut présenter des bords irréguliers. De plus, lors des tests en flexion sur la largeur de la carte de format standard, les traverses peuvent se tordre et subir des contraintes. Ces contraintes peuvent exceptionnellemnt détériorer le micromodule contenu dans la carte ou rompre l'une des bretelles involontairement. Dans ce cas, la carte grand format risque de ne pas être conforme à la norme ISO 7816 sur le plan de sa résistance aux efforts de flexion et de torsion.

Pour être complet, il convient de noter que US-A-4,764,803 décrit une carte à puce de format standard pourvu d'un anneau entourant la puce afin de réduire le stress mécanique exercé sur la puce par exemple lors que la puce est pliée.

L'invention permet de résoudre les problèmes ci-dessus en proposant une carte améliorée. Pour cela, elle propose une carte à puce telle que definie à la revendication 1.

Selon une autre caractéristique de l'invention, la charnière est constituée d'un amincissement de l'épaisseur de la bretelle.

Selon encore une autre caractéristique de l'invention, l'amincissement présente une forme de rigole au profil arrondi.

Selon encore une autre caractéristique de l'invention, le lieu imposé de rupture est réalisé par deux entailles sur les côtés recto et verso de la carte.

Selon encore une autre caractéristique de l'invention la (les) bretelle(s) comporte(nt) des congés de raccordement respectivement à la carte et à la mini-carte.

Selon une autre caractéristique de l'invention, la largeur de la bretelle côté mini-carte est inférieure à la largeur de la bretelle côté corps de carte.

Selon encore une autre caractéristique, la carte à puce comporte en outre une grande bretelle, le long d'un petit côté de la mini-carte, qui comporte un lieu imposé de rupture formé par deux entailles qui s'étendent sur toute sa largeur et sur les côtés recto et verso de la carte.

Grâce à la séparation de la bretelle en deux portions comportant respectivement un amincissement de l'épaisseur et un lieu imposé de rupture, les contraintes mécaniques sont séparées. Grâce à l'invention, le détachement de la mini-carte est facilité et il se fait sans bavure aussi bien du côté recto que du côté verso de la carte. De plus, la mini-carte présente une bonne résistance aux déformations dues aux tests en flexion de la carte.

Un autre objet de l'invention se rapporte en outre à un procédé de réalisation d'une carte à puce tel que defini à la revendication 10.

La découpe partielle permet notamment de détacher de la carte aux dimensions normalisées une carte de dimensions réduites prédéterminées.

Le détachement est fait seulement après la fin de toutes les opérations de fabrication, de tests, et de personnalisation imprimée, de sorte que l'on peut utiliser tous les appareils standard de fabrication et de tests sans aucune contrainte due aux dimensions réduites désirées pour la carte finale.

Par conséquent, le coût de fabrication est réduit puisqu'il n'est pas nécessaire d'investir dans des équipements de fabrication supplémentaires coûteux, uniquement à cause de ces problèmes de dimensions.

D'autres particularités et avantages de l'invention apparaîtront à la lecture de la description suivante donnée à titre d'exemple illustratif mais non limitatif et faite en référence aux figures annexées qui représentent :
- la figure 1, le principe de l'invention pour la réalisation d'une carte de format réduit,
- la figure 2, en vue agrandie, un exemple de prédécoupe par fente interrompue laissant subsister des bretelles de matière,
- la figure 3, une vue en coupe selon B-B de la figure 2, représentant une bretelle dans son épaisseur,
- la figure 4, une vue de dessus et agrandie de la bretelle de la figure 3,
- la figure 5, une vue en coupe selon D-D de la figure 2, représentant une grande bretelle, dans son épaisseur, qui est située le long d'un petit bord de la carte de format réduit.

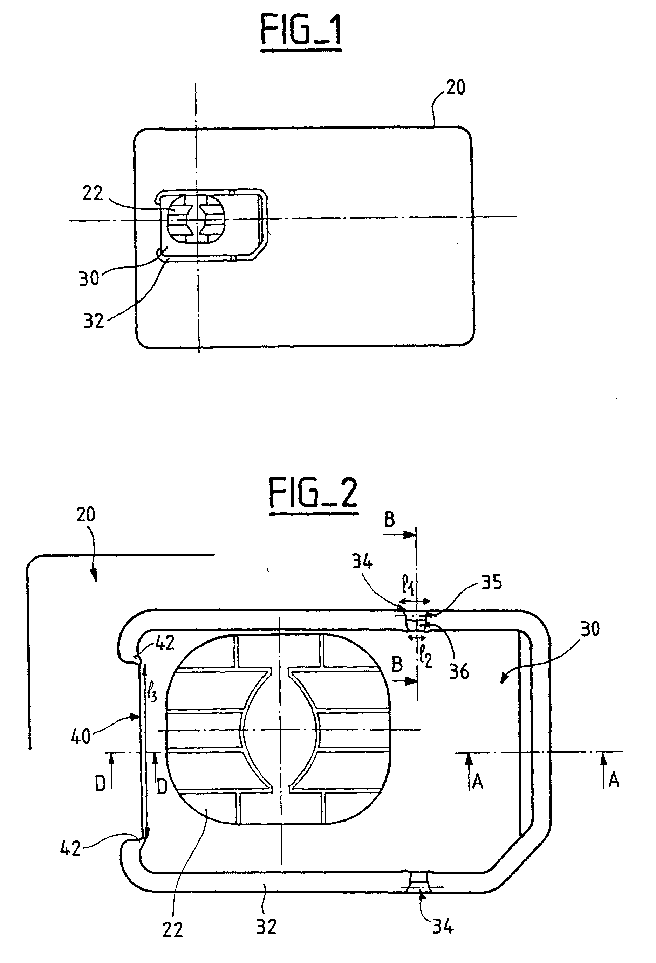

La figure 1 représente la mise en oeuvre de l'invention. A partir d'une carte de format standard rectangulaire plat 20, de longueur 8,5 cm; largeur 5,4 cm et épaisseur inférieure à un millimètre, on effectue tout le processus de fabrication, y compris le test du micromodule 22 (une fois que celui-ci a été mis en place dans le coin en haut à gauche de la carte, avec des contacts affleurants) et le test de personnalisation des surfaces de la carte par impression de textes graphiques.

Mais la carte finale pourra être beaucoup plus petite et son contour est représenté à la figure 2. Ce contour est délimité par une découpe 32 et par des lieux imposés de rupture, disposés autour du micromodule 22. La carte sera découpée le long de ce contour.

Plusieurs procédés peuvent être utilisés et la découpe peut se faire à divers moments de la fabrication. Elle pourrait par exemple se faire directement en une fois à la fin de la fabrication.

On préfère selon l'invention effectuer à un stade intermédiaire une découpe partielle et non une découpe totale. C'est seulement au stade de l'envoi chez l'utilisateur, ou même chez l'utilisateur au moment de l'insertion dans un lecteur au standard de format réduit, que la carte au format réduit 30 sera détachée de la carte au format standard 20 par simple pression, par exemple avec la pression d'un doigt.

Dans le cas où l'utilisateur utilise une carte de grand format, la mini-carte 30 n'est pas détachée.

A la figure 2, on a représenté une découpe partielle consistant en une fente 32 sur toute l'épaisseur de la carte. Cette fente 32 définit et s'étend sur le pourtour de la mini-carte 30, sauf à certains endroits où elle est interrompue et laisse des bretelles 34 et 40 reliant la carte 30 de format réduit au reste de la carte 20 de format standard.

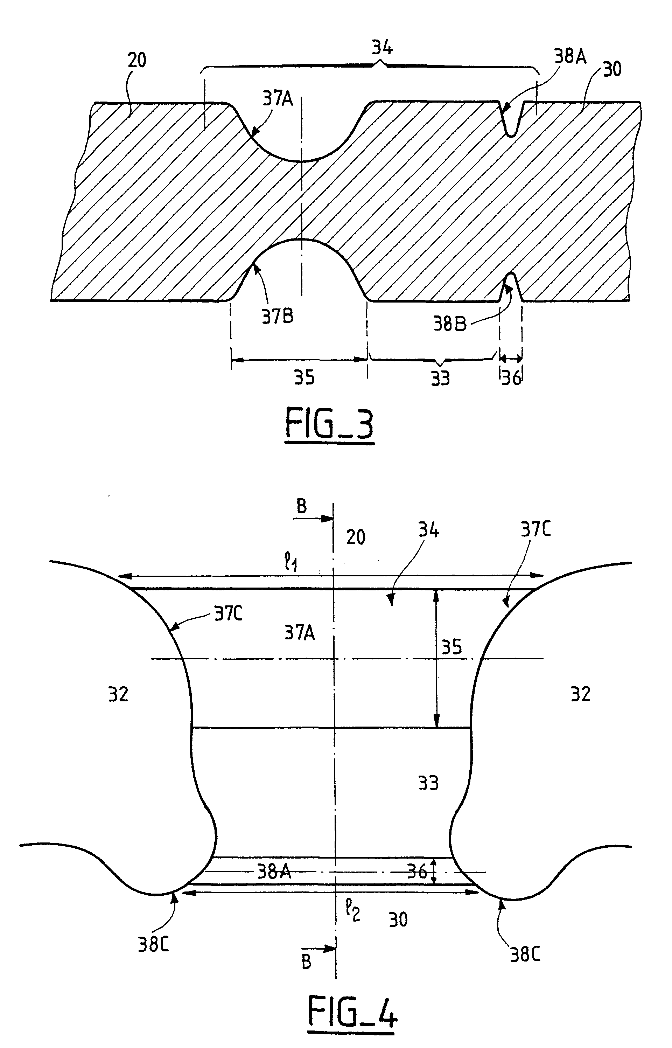

La figure 3 représente une vue en coupe selon B-B d'une bretelle 34 représentée à la figure 2. Cette bretelle 34 comporte deux portions 35 et 36 dans lesquelles elle présente une épaisseur affaiblie.

Une première portion 36, située du côté de la carte de format réduit 30 est conformée pour constituer un lieu imposé de rupture. Ce lieu imposé de rupture est constitué, dans l'exemple, par deux entailles 38A, 38B, de forme conique, réalisées respectivement sur les faces recto et verso de la carte, et sur toute la largeur 12 de la bretelle 34, tel qu'illustré sur les figures 2 et 4. Ces entailles sont par exemple réalisées sur une profondeur de 150µm sur le recto de la carte (référence 38A), et sur une profondeur de 120µm sur le verso de la carte (référence 38B).

Le fait de réaliser ces entailles des deux-côtés de la carte permet de faciliter la découpe manuelle (par simple pression des doigts) et de la réaliser sans bavure, autant du côté recto de la carte que du côté verso. Ainsi, la mini-carte 30, une fois détachée, présente des bords nets et réguliers. Ces entailles constituent un exemple préféré de lieu imposé de rupture. D'autres variantes peuvent convenir telles que affaiblissement, enlèvement de matière, perforation, etc...

Dans une deuxième portion 35, située du côté de la carte de format standard 20, l'épaisseur est amincie sur les deux côtés recto 37A et verso 37B. Cet amincissement est notamment réalisé par enfoncement d'un outil approprié dans la portion 35, sur une profondeur suffisante, par exemple 250 µm, sur chaque face de la carte. Il s'étend par ailleurs sur toute la largeur 11 de la bretelle tel qu'illustré sur la figure 2 et sur la vue de dessus et agrandie de la figure 4.

De plus, cet amincissement 37A, 37B, dans la portion 35 de la bretelle 34, présente de préférence une forme de rigole au profil arrondi. Cette forme arrondie évite la création et la propagation des fissures lors des tests en flexion de la carte. Des angles trop vifs, tels que dans une forme trapézoïdale par exemple, ne peuvent pas convenir car ils n'évitent pas la propagation de ces fissures.

Cet amincissement 37A, 37B de l'épaisseur de la bretelle 34 constitue une charnière. Une telle charnière a pour fonction d'assurer un découplage mécanique entre le corps de carte et la première portion 36 conformée pour constituer un lieu imposé de rupture. Ainsi, on évite une rupture accidentelle des bretelles 34 et une séparation involontaire de la mini-carte 30.

La charnière a également pour fonction, lors d'une pression volontaire, par exemple d'un doigt sur la mini-carte 30, de déplacer et concentrer les contraintes de pression vers le lieu imposé de rupture (dans la première portion 36), garantissant ainsi une rupture à cet endroit plutôt qu'à un autre endroit de la bretelle.

La charnière peut être obtenue directement par injection dans le cas où la carte et la fente permettant de délimiter le contour de la carte au format réduit seraient obtenues par injection. Dans ce cas, la forme de la charnière peut être équivalente à un amincissement arrondi comme dans la figure 3, ou par exemple constituer une lame flexible répondant au principe de pivot.

En variante, il serait possible de réaliser la charnière en une matière plus souple que le reste de la carte selon une technique connue d'injection en bi-composant. Une matière distincte souple compatible en adhésion avec celle du corps de carte serait injectée dans le moule au niveau de la bretelle.

La charnière pourrait également être discontinue en deux parties s'imbriquant l'une dans l'autre, la mini-carte et le corps de carte étant fabriqués indépendamment chacun avec une partie de charnière destinée à s'imbriquer avec la partie complémentaire.

Au cours de la réalisation de l'amincissement 37A, 37B dans la deuxième portion 35, et du lieu imposé de rupture 38A, 38B dans la première portion 36, de la matière est refoulée sur les côtés, du fait de la pénétration, dans l'épaisseur de la carte, de l'outil utilisé. Ce refoulement de matière est contrôlé pour qu'il soit le plus plan possible, afin d'éviter trop de rebut lors de la personnalisation des cartes par transfert thermique.

La fente 32 présente alors deux congés de raccordement 37C, 38C qui apparaissent de chaque côté de la bretelle 34 tel qu'illustré sur la figure 2 et sur la vue de dessus agrandie de la figure 4. Ainsi, dans le plan de la surface de la carte situé respectivement au-dessus et au-dessous de la portion 35 réservée à l'amincissement, la fente 32 présente un premier congé de raccordement 37C à la carte de format standard 20 ; et dans le plan de la surface de la carte situé respectivement au-dessus et au-dessous de la portion 36 réservée au lieu imposé de rupture, la fente 32 présente un deuxième congé de raccordement 38C à la mini-carte 30. Le rayon de courbure du congé de raccordement 38C à la mini-carte est inférieur à celui du congé de raccordement 37C au corps de carte 20. De plus, la bretelle 34 présente une largeur 12, du côté de la carte de format réduit 30, qui est inférieure à la largeur 11 du côté de la carte de format standard 20.

Les efforts de pression sur la mini-carte sont déplacés par la charnière (deuxième portion 35) vers la zone 33, située entre les deux portions 35, 36 de la bretelle 34, et sont concentrés au niveau de l'amorce de rupture (première portion 36), si bien qu'il est possible de réaliser une découpe franche de la mini-carte. La mini-carte 30 ainsi obtenue présente donc des bords nets et réguliers.

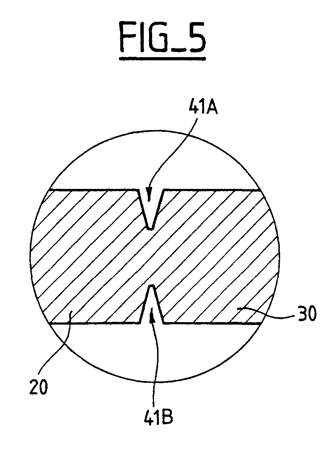

La carte à puce selon l'invention peut par ailleurs comporter d'autres types de bretelles. Ainsi, elle peut par exemple comporter une grande bretelle 40 qui s'étend le long d'un petit côté de la mini-carte 30, tel qu'illustré sur le schéma de la figure 2. La figure 5 représente une vue en coupe de cette grande bretelle référencée 40, dont la largeur 13 est supérieure à celle des bretelles 34 précédemment décrites. Cette bretelle 40 comporte en fait simplement un lieu imposé de rupture formé par deux entailles 41A, 41B qui s'étendent sur toute sa largeur. Ces deux entailles 41A, 41B sont respectivement réalisées sur les deux côtés recto et verso de la carte.

La fente 32 présente deux petits congés 42 aux deux extrémités de la bretelle 40. Ces congés en retrait permettent une bonne orientation des contraintes vers les entailles 41A, 41B lors de la découpe de la mini-carte 30, par pression d'un doigt par exemple.

## Revendications

1. Carte à puce de format standard comprenant un corps de carte (20) et une mini-carte (30) qui lui est reliée par au moins une bretelle (34), ladite bretelle comportant une première portion (36) disposée côté mini-carte (30) et conformée pour constituer un lieu imposé de rupture pour permettre une séparation de la mini-carte (30) par la pression d'un doigt, **caractérisée en ce que** ladite bretelle (34) comporte également une seconde portion (35), distincte de la première portion (36), disposée côté corps de carte (20) et apte à former une charnière.

2. Carte à puce selon la revendication 1, **caractérisée en ce que** la charnière est constituée d'un amincissement (37A, 37B) de l'épaissur de la bretelle (34).

3. Carte à puce selon la revendication 2, **caractérisée en ce que** l'amincissement (37A, 37B) présente une forme de rigole au profil arrondi.

4. Carte à puce selon la revendication 3, **caractérisé en ce que** l'amincissement (37A, 37B) est réalisé sur une profondeur de 250 µm sur les côtés recto et verso de la carte.

5. Carte à puce selon l'une des revendications 1 à 4, **caractérisée en ce que** le lieu imposé de rupture est réalisé par deux entailles (38A, 38B) sur les côtés recto et verso de la carte.

6. Carte à puce selon la revendication 5, **caractérisée en ce que** les entailles (38A, 38B) sont réalisées sur une profondeur de 150 µm sur le recto (38A) et de 120 µm sur le verso (38B) de la carte.

7. Carte à puce selon l'une des revendications 1 à 6, **caractérisée en ce que** la ou les bretelle(s) (34) comporte(nt) des congés de raccordement (37C, 38C) respectivement à la carte (20) et à la mini-carte (30).

8. Carte à puce selon l'une des revendications 1 à 7, **caractérisé en ce que** la largeur (12) de la bretelle (34) côté mini-carte (30) est inférieure à la largeur (11) de la bretelle (34) côté corps de carte (20).

9. Carte à puce selon l'une des revendications 1 à 8, **caractérisée en ce qu'**elle comporte en outre une grande bretelle (40) le long d'un petit côté de la mini-carte (30), et **en ce que** cette grande bretelle comporte un lieu imposé de rupture formé par deux entailles (41A, 41B) qui s'étendent sur toute sa largeur et sur les côtés recto et verso de la carte.

10. Procédé de réalisation d'une carte à puce de format réduit (30), comprenant la totalité du procédé de fabrication d'une carte à puce de format standard (20), et une étape supplémentaire de formation d'une découpe partielle aux dimensions de la mini-carte (30), ladite découpe partielle étant constituée d'une fente (32) interrompue localement par au moins une bretelle (34) entre la carte de format réduit (30) et la carte de format standard (20), **caractérisé en ce que** la ou les bretelle(s) (34) est (sont) réalisée(s) de sorte qu'elle(s) comporte(nt) une première portion (36) disposée du côté de la mini-carte (30) et conformée pour constituer un lieu imposé de rupture, et une deuxième portion (35), distincte de la première portion (36), disposée du côté de la carte de format standard (20) et constituée d'un amincissement de l'épaisseur de la ou des bretelle(s), lesdites première et deuxième portions étant réalisées sur toute la largeur de la (des) bretelle(s) (34) et sur les côtés recto et verso de la carte.

## Patentansprüche

1. Chipkarte im Standardformat mit einem Kartenkörper (20) und einer Minikarte (30), die über mindestens einen Steg (34) mit im verbunden ist, wobei der besagte Steg einen ersten Abschnitt (36) umfasst, der auf der Seite der Minikarte (30) angeordnet und ausgebildet ist, um eine Sollbruchstelle zu bilden, um eine Trennung der Minikarte (30) per Fingerdruck zu ermöglichen, **dadurch gekennzeichnet, dass** der besagte Steg (34) ebenfalls einen zweiten, vom ersten Abschnitt (36) getrennten Abschnitt (35) umfasst, der auf der Seite des Kartenkörpers (20) angeordnet ist und ein Scharnier bilden kann.

2. Chipkarte nach Anspruch 1, **dadurch gekennzeichnet, dass** das besagte Scharnier aus einer Verdünnung (37A, 37B) der Dicke des Stegs (34) besteht.

3. Chipkarte nach Anspruch 2, **dadurch gekennzeichnet, dass** die Verdünnung (37A, 37B) eine Rinnenform mit abgerundetem Profil aufweist.

4. Chipkarte nach Anspruch 3, **dadurch gekennzeichnet, dass** die Verdünnung (37A, 27B) über eine Tiefe von 260 µm auf der Vorder- und der Rückseite der Karte hergestellt wird.

5. Chipkarte nach einem der Ansprüche 1 bis 4, **dadurch gekennzeichnet, dass** die Sollbruchstelle aus zwei Kerben (38A, 38B) auf der Vorder- und Rückseite der Karte besteht.

6. Chipkarte nach Anspruch 5, **dadurch gekennzeichnet, dass** die Kerben (38A, 38B) über eine Tiefe von 150 µm auf der Vorderseite (38A) und von 120 µm auf der Rückseite (38B) der Karte vorgesehen sind.

7. Chipkarte nach einem der Ansprüche 1 bis 6, **dadurch gekennzeichnet, dass** der oder die Steg(e) (34) Hohlkehlen (37C, 38C) jeweils für den Anschluss an die Karte (20) und die Minikarte (30) umfasst (umfassen).

8. Chipkarte nach einem der Ansprüche 1 bis 7, **dadurch gekennzeichnet, dass** die Breite (12) des Stegs (34) auf der Seite der Minikarte (30) kleiner ist als die Breite (11) des Stegs (34) auf der Seite des Kartenkörpers (20).

9. Chipkarte nach einem der Ansprüche 1 bis 8, **dadurch gekennzeichnet, dass** sie ferner einen großen Steg (40) entlang einer Schmalseite der Minikarte (30) aufweist, und dass dieser große Steg eine Sollbruchstelle umfasst, die von zwei Kerben (41A, 41B) gebildet wird, die sich über seine ganze Breite und auf der Vorder- und Rückseite der Karte erstrecken.

10. Herstellungsverfahren einer kleinformatigen Chipkarte (30), das das gesamte Fertigungsverfahren einer Chipkarte im Standardformat (20) umfasst, sowie eine zusätzliche Etappe zur Herstellung eines Teilausschnitts mit den Abmessungen der Minikarte (30), wobei der besagte Teilausschnitt aus einem örtlich von mindestens einem Steg (34) zwischen der kleinformatigen Karte (30) und der Karte im Standardformat (20) unterbrochenen Schlitz (32) besteht, **dadurch gekennzeichnet, dass** der oder die Steg(e) so beschaffen ist (sind), dass er (sie) einen ersten Abschnitt (36) umfasst (umfassen), der auf der Seite der Minikarte (30) angeordnet und ausgebildet ist, um eine Sollbruchstelle zu bilden, und einen zweiten, vom ersten Abschnitt (36) getrennten Abschnitt (35), der auf der Seite der Karte im Standardformat (20) angeordnet ist und aus einer Verdünnung der Dicke des Stegs (der Stege) besteht, wobei der besagte erste und zweite Abschnitt über die ganze Breite des Stegs (der Stege) und auf der Vorder- und Rückseite der Karte vorgesehen sind.

## Claims

1. A standard-format smart card comprising a card body (20) and a minicard (30) connected to it by at least one strap (34), the said strap having a first portion (36) disposed on the minicard (30) side and shaped so as to constitute an imposed breakage site to allow separation of the minicard (30) by finger pressure, **characterised in that** the said strap (34) also has a second portion (35) distinct from the first portion (36), disposed on the card body (20) side and able to form a hinge.

2. A smart card according to Claim 1, **characterised in that** the hinge consists of a thinning (37A, 37B) of the thickness of the strap (34).

3. A smart card according to Claim 2, **characterised in that** the thinning (37A, 37B) has the shape of a trench with a rounded profile.

4. A smart card according to Claim 3, **characterised in that** the thinning (37A, 37B) is produced over a depth of 250 µm on the recto and verso sides of the card.

5. A smart card according to one of Claims 1 to 4, **characterised in that** the imposed breakage site is produced by two notches (38A, 38B) on the recto and verso sides of the card.

6. A smart card according to Claim 5, **characterised in that** the notches (38A, 38B) are produced over a depth of 150 µm on the recto (38A) and 120 µm on the verso (38B) side of the card.

7. A smart card according to one of Claims 1 to 6, **characterised in that** the strap or straps (34) have fillets (37C, 38C) for connecting respectively to the card (20) and to the minicard (30).

8. A smart card according to one of Claims 1 to 7, **characterised in that** the width (12) of the strap (34) on the minicard (30) side is less than the width (11) of the strap (34) on the card body (20) side.

9. A smart card according to one of Claims 1 to 8, **characterised in that** it also has a large strap (40) along a small side of the minicard (30), and **in that** this large strap has an imposed breakage site formed by two notches (41A, 91B) which extend over its entire width and on the recto and verso sides of the card.

10. A method for producing a reduced-format smart card (30), comprising all the method for manufacturing a standard-format smart card (20), and an additional step of forming a partial cut to the dimensions of the minicard (30), the said partial cut consisting of a slot (32) interrupted locally by at least one strap (34) between the reduced-format card (30) and the standard-format card (20), **characterised in that** the strap or straps (34) are produced so that they have a first portion (36) disposed on the minicard (30) side and shaped so as to constitute an imposed breakage site, and a second portion (35), distinct from the first portion (36), disposed on the standard-format card (20) side and consisting of a thinning of the thickness of the strap or straps, the said first and second portions being produced over the entire width of the strap or straps (24) and on the recto and verso sides of the card.
